# EUROPÄISCHE PATENTSCHRIFT

(11) **EP 0 892 580 B1**
(45) Veröffentlichungstag und Bekanntmachung des Hinweises auf die Patenterteilung: **05.10.2005**
(21) Anmeldenummer: 98440153.9
(22) Anmeldetag: 16.07.1998
(51) Int. Cl.: H04Q 11/04, H04J 14/00, H04Q 11/00, H04J 14/08

(54) **Verfahren zum Zuteilen von Zeitschlitzen, sowie System, Zentrale und Teilnehmereinrichtung zur Durchführung dieses Verfahrens**
Method of assigning timeslots and system, exchange and subscriber equipment for carrying out the method
Procédé pour allocation d'intervalles de temps et système, centrale, équipement d'abonné, pour la mise en oeuvre du procédé

(30) Priorität: 17.07.1997 DE 19730623
(43) Veröffentlichungstag der Anmeldung: 20.01.1999
(73) Patentinhaber: ALCATEL, 75008 Paris (FR)
(72) Erfinder: Wahl, Stefan, 71701 Schwieberdingen (DE)
(74) Vertreter: Brose, Gerhard

(56) Entgegenhaltungen:
- EP-A- 0 691 760
- EP-A- 0 758 822
- WO-A-95/26592
- WO-A-97/17778

## Beschreibung

Die Erfindung betrifft ein Verfahren zum Zuteilen von Zeitschlitzen in einem System mit mehreren über ein gemeinsames Medium mit einer zentrale verbundenen Teilnehmereinrichtungen von Teilnehmern, wobei das gemeinsame Medium in mehrere Frequenz-oder Wellenlängenkanäle unterteilt ist, die wiederum in Zeitschlitze unterteilt sind, nach dem Oberbegriff des Anspruchs 1, ein System nach dem Oberbegriff des Anspruchs 2, eine Zentrale nach dem Oberbegriff des Anspruchs 3 und eine Teilnehmereinrichtung nach dem Oberbegriff des Anspruchs 4. Derartiges ist beispielsweise bekannt aus EP-A-0 691 760.

Bei allen Systemen mit Mehrfachzugriff auf ein gemeinsames Medium stellt sich immer die Frage des geordneten Zugriffs auf dieses Medium. Im Falle des Funks im Medium "freier Raum" beispielsweise erfolgt die Aufteilung des Mediums durch internationale Vereinbarungen und darauf basierende Frequenzzuweisungen. Auch für andere Medien wie Glasfaser- und Koaxkabelnetze sind teilweise feste Zuweisungen vorgesehen. Zumindest ein Teil der Gesamtkapazität muß aber immer nach dem aktuellen Bedarf vergeben werden.

Weitverbreitet ist es, für solche Fälle Zeitschlitze für die Dauer einer Verbindung fest zuzuteilen. Für variables Verkehrsaufkommen oder auch für konstantes Verkehrsaufkommen in einer asynchronen Umgebung ist es auch weitverbreitet, einer Verbindung einen Kanal zuzuordnen, innerhalb dessen die jeweils zu verwendenden Zeitschlitze dann durch irgendwelche Mechanismen festgelegt werden.

Bei der Zuordnung eines Kanals zu einer Verbindung sind dabei jeweils die Parameter der bereits diesem Kanal zugeordneten Verbindungen zu berücksichtigen. Unter Umständen müssen dann zunächst andere Verbindungen in einen anderen Kanal umrangiert werden, bevor ein Kanal für die neue Verbindung ausreichend Restkapazität aufweist. Dennoch kann dann zumindest kurzfristig durch Schwankungen des Verkehrsaufkommens der einzelnen Verbindungen in einem Kanal ein Engpaß auftreten, während zu anderen Zeiten derselbe Kanal nur wenig ausgelastet ist.

Der Erfindung liegt die Aufgabe zugrunde, die Kapazität der Kanäle effektiver zu verwalten.

Diese Aufgabe wird erfindungsgemäß gelöst durch ein Verfahren nach der Lehre des Anspruchs 1, ein System nach der Lehre des Anspruchs 2, eine Zentrale nach der Lehre des Anspruchs 3 und eine Teilnehmereinrichtung nach der Lehre des Anspruchs 4.

Es werden also alle Zeitschlitze in allen Kanälen als gemeinsamer Pool eingesetzt. Jeder Zeitschlitz wird zusammen mit einer Kanalzuteilung vergeben.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt ein größeres Zugangssystem für Kabelfernsehen und ATM, das erfindungsgemäße Systeme, Zentralen und Teilnehmereinrichtungen zur Durchführung des erfindungsgemäßen Verfahrens enthält.
- Figur 2: zeigt einen Rahmenaufbau, der zur Durchführung des erfindungsgemäßen Verfahrens dient.

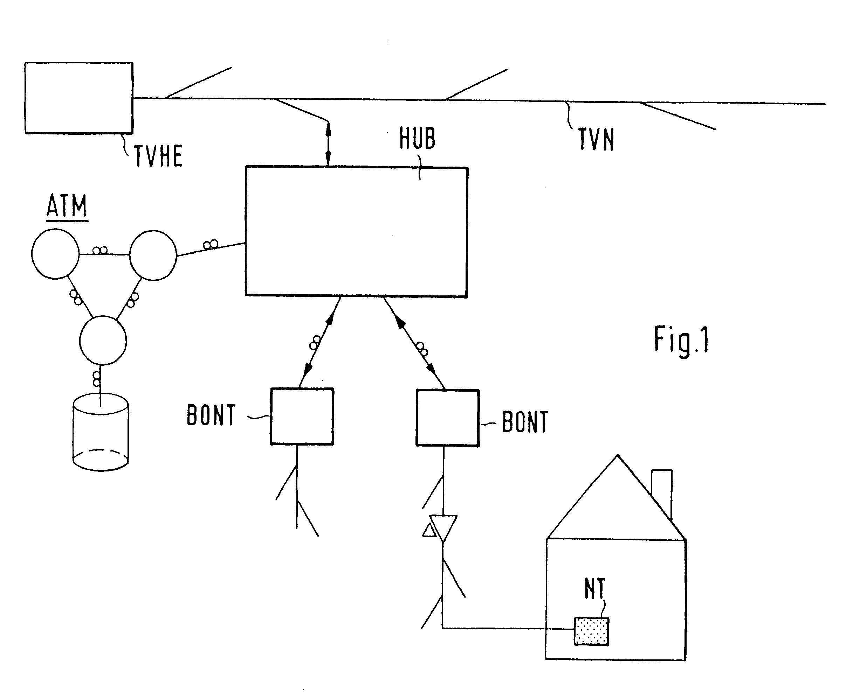

Anhand der Figur 1 wird zunächst das Umfeld beschrieben, in dem das erfindungsgemäße Verfahren eingesetzt wird.

Ausgangspunkt ist ein Fernseh-Kabelverteilnetz TVN mit einer Kopfstation TVHE. Zumindest ein Teil der an diesem Netz angeschlossenen Teilnehmer soll nun zusätzlich an ein ATM-Netz ATM angeschlossen werden. Das ATM-Netz ATM ist hier durch drei miteinander verbundene Vermittlungsstellen und eine Datenbank dargestellt.

Zur Anbindung von Teilnehmern sowohl an das Kabelverteilnetz als auch an das ATM-Netz ist hier eine erfindungsgemäße Zentrale vorgesehen, die hier mit der hierfür in Fachkreisen oft üblichen Bezeichnung HUB versehen ist. Zur Anbindung von Teilnehmereinrichtungen NT ist in diesem Beispiel eine hybrides Netz dargestellt. Von der Zentrale HUB bis zu einem Verteiler BONT ist hier eine optische Faser verwendet. Vom Verteiler BONT bis zur Teilnehmereinrichtung NT ist ein Netz aus sich verzweigenden Koaxialkabeln mit darin für beide Richtungen enthaltenen Verstärkern vorgesehen. Als Teilnehmereinrichtung NT wird hier diejenige Einrichtung bezeichnet, die den teilnehmerseitigen Teil des erfindungsgemäßen Verfahrens durchführt. Dies ist nicht das teilnehmerseitige Endgerät, sondern eine teilnehmerseitige Netzabschlußeinheit, gegebenenfalls auch ein Endgerät mit darin eingebauter teilnehmerseitiger Netzabschlußeinheit (NT = Network Termination). Der Verteiler BONT ist hier der Netzabschluß des breitbandigen optischen Netzes.

Die Zentrale HUB wählt nun die von den angeschlossenen Teilnehmern ausgewählte Information vom Fernseh-Kabelverteilnetz TVN, wandelt sie gegebenenfalls in ATM-Zellen und faßt sie mit denjenigen ATM-Zellen zu einem gemeinsamen Datenstrom zusammen, die für die angeschlossenen Teilnehmer bestimmt sind. Im Verteiler BONT erfolgt nur eine Umsetzung zwischen optischen und elektrischen Signalen.

Grundsätzlich erfolgt in der Richtung von den Teilnehmern zur Zentrale dasselbe wie in der Richtung von der Zentrale zu den Teilnehmern. Allerdings ist das Verkehrsaufkommen in der Richtung von der Zentrale zu den Teilnehmern deutlich größer als in der Gegenrichtung. Dies soll auch durch die unterschiedliche Größe der in den Koaxialkabeln eingezeichneten Verstärker zum Ausdruck gebracht werden. Auch die Kapazität der Übertragungseinrichtungen ist darauf abgestimmt. Die Ursache liegt darin, daß die Teilnehmer wesentlich mehr Information abrufen als sie selbst ins Netz einspeisen. Informationsanbieter müssen auf andere Art, vorwiegend direkt am ATM-Netz, angeschlossen sein.

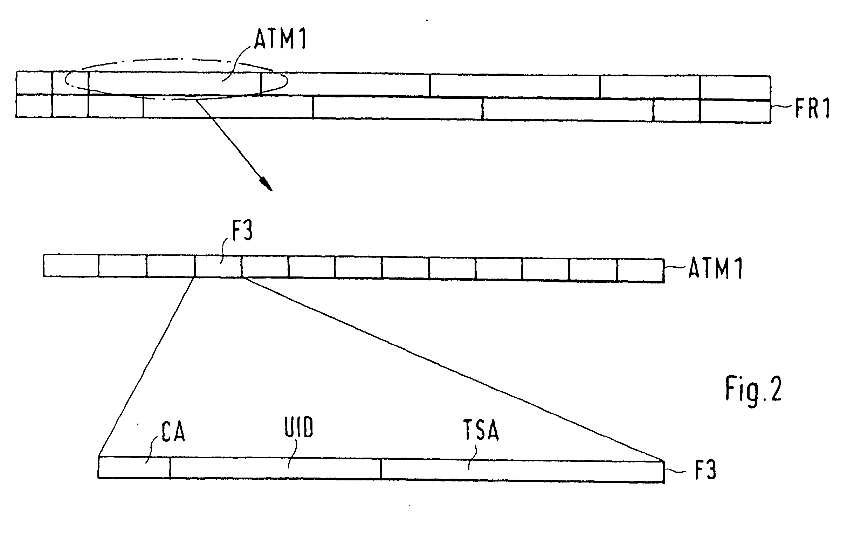

Bezüglich der Steuerung dagegen sind die Teilnehmer grundsätzlich anders ausgestattet als die Zentrale. Insbesondere wird die Verteilung der Kapazität durch die Zentrale gesteuert. Dies erfolgt dadurch, daß den Teilnehmereinrichtungen von der Zentrale signalisiert wird, welche Zeitschlitze in welchen Kanälen sie verwenden dürfen. Wie dies erfindungsgemäß abläuft, wird nun im folgenden anhand der Figur 2 beschrieben:

In dem der Erfindung zugrundeliegenden Anwendungsfall wird von der Zentrale zu den Teilnehmern ein Datenstrom gesandt, der eine Überrahmenstruktur mit 18 aus je zwei Unterrahmen bestehenden Rahmen aufweist. Der erste Rahmen FR1 dieser 18 Rahmen mit seinen zwei Unterrahmen ist in der ersten Zeile von Figur 2 dargestellt. Der Aufbau dieser Rahmen ist hier ohne Bedeutung; jedenfalls enthält jeder Rahmen als Nutzlast sieben ATM-Zellen. In diesem Beispiel dient die erste ATM-Zelle ATM1 des ersten Rahmens FR1 eines jeden Überrahmens der Zuweisung von Kapazität an die Teilnehmereinrichtungen durch die Zentrale. Diese ATM-Zelle ATM1 ist in der zweiten Zeile von Figur 2 näher dargestellt.

Die ATM-Zelle ATM1 weist, wie jede ATM-Zelle, zunächst einen Zellkopf und daran anschließend einen Nutzlastteil auf. Der Nutzlastteil ist hier in 12 Felder mit je 4 Bytes unterteilt. Jedes dieser Felder, wie beispielsweise das Feld F3, ist geeignet, um einer Teilnehmereinrichtung einen Zeitschlitz und den zugehörigen Kanal zuzuweisen. Bedingt durch die sehr unterschiedliche Kapazität der beiden Richtungen werden in derselben Zeit, in der die Zentrale einen ganzen Überrahmen sendet, von den Teilnehmereinrichtungen insgesamt nur knapp 8 ATM-Zellen gesendet. (Die Übertragungsgeschwindigkeiten der beiden Richtungen stehen in keinem ganzzahligen Verhältnis und sind auch nicht aufeinander synchronisiert.) Eine solche ATM-Zelle ATM1 muß deshalb die Zuweisungen für in der Regel 8 ATM-Zellen der Gegenrichtung enthalten; durch die Nichtganzzahligkeit sind manchmal auch nur 7 Zuweisungen erforderlich.

Im vorliegenden Beispiel gibt es nur einen sehr breitbandigen Kanal von der Zentrale zu den Teilnehmern. In diesem Kanal kann dann in der jeweils ersten Zelle eines Überrahmens für alle Kanäle der Gegenrichtung die Zuweisung erfolgen. Aus verschiedenen Gründen wird versucht, auch dann alle Zeitschlitze zu vergeben, wenn dafür gar nicht so viele Anforderungen vorliegen. Die Teilnehmereinrichtungen, denen diese Zeitschlitze zugeteilt wurden, senden dann jeweils eine Leerzelle. Deshalb ändert sich die Zahl der benötigten Zuweisungs-Felder auch nicht mit dem Verkehrsaufkommen. Die Zahl der Kanäle in Gegenrichtung, für die Zeitschlitze zu vergeben sind, beeinflußt dagegen sehr wohl die Zahl der benötigten Zuweisungs-Felder. Im vorliegenden Beispiel war jedoch die Überrahmenlänge frei wählbar und wurde so gewählt, daß sich gerade die oben beschriebenen Verhältnisse ergaben. Das gleiche Resultat würde sich aber auch ergeben, wenn nicht nur eine ATM-Zelle pro Überrahmen hierfür herangezogen würde oder wenn nicht gerade 8 von 12 Feldern dieser ATM-Zellen für die Zeitschlitz-Zuweisung verwendet würden. Auch ist es möglich, einen Teil der Zeitschlitze oder die Zeitschlitze für einen Teil der Teilnehmereinrichtungen vorab zumindest für eine bestimmte Zeit fest zu vergeben.

Ein Zuweisungs-Feld, das Feld F3, ist in der dritten Zeile von Figur 2 dargestellt. Es weist drei Teilfelder auf und zwar für die Kanalzuweisung, CA, für die Teilnehmerkennzeichnung, UID, und für die Zeitschlitzzuweisung, TSA. Damit ist für jeden Zeitschlitz aller von den Teilnehmern zu der Zentrale führenden Kanäle eindeutig eine Zuweisung möglich.

Die erfindungsgemäß zu verwendenden Teilnehmereinrichtungen müssen in der Lage sein, von einem Zeitschlitz zum nächsten den Kanal zu wechseln. Dies ist aber grundsätzlich kein Problem.

Von der Erfindung nicht berührt sind die Fragen, wie zwischen den verschiedenen Teilnehmereinrichtungen die Synchronisation erreicht wird, wie erstmals die Verbindung aufgenommen wird und wie die Zeitschlitze angefordert und genau bestimmt werden. Dies sind Fragen, die sich, wie viele andere, auch bei anderen Lösungen stellen und die auch grundsätzlich gelöst sind. Beispielsweise bietet es sich für die Anforderung von Zeitschlitzen an, dies zusammen mit normaler Nutzsignalübertragung im jeweils zugeteilten Zeitschlitz des zugeteilten Kanals durchzuführen. Anstatt die Zeitschlitze jeweils anzufordern, kann auch eine feste Kapazität vereinbart sein, aus der die Zentrale dann jeweils den aktuellen Bedarf der betroffenen Teilnehmer ermittelt.

## Patentansprüche

1. Verfahren zum Zuteilen von Zeitschlitzen in einem System mit mehreren über ein gemeinsames Medium mit einer Zentrale (HUB) verbundenen Teilnehmereinrichtungen (NT) von Teilnehmern, wobei das gemeinsame Medium in mehrere Frequenz-oder Wellenlängenkanäle unterteilt ist, die wiederum in Zeitschlitze unterteilt sind, **dadurch gekennzeichnet, daß** durch die Zentrale Zeitschlitze an mindestens einen Teil der Teilnehmereinrichtungen zugeteilt werden durch Angabe je eines Kanals (CA) und einer Zeitschlitznummer (TSA) für jeden zugeteilten Zeitschlitz, daß jede betroffene Teilnehmereinrichtung nach jedem benützten Zeitschlitz auf den nächsten zugeteilten Kanal wechselt und im Zeitschlitz mit der nächsten zugeteilten Zeitschlitznummer Information sendet.

2. System mit mehreren über ein gemeinsames Medium mit einer Zentrale (HUB) verbundenen Teilnehmereinrichtungen (NT) von Teilnehmern, wobei das gemeinsame Medium in mehrere Frequenz-oder Wellenlängenkanäle unterteilt ist, die wiederum in Zeitschlitze unterteilt sind, **dadurch gekennzeichnet, daß** die Zentrale Mittel aufweist, um Zeitschlitze an die Teilnehmereinrichtungen zuzuteilen durch Angabe je eines Kanals und einer Zeitschlitznummer für jeden zugeteilten Zeitschlitz, daß mindestens ein Teil der Teilnehmereinrichtungen Mittel aufweist, um nach jedem benützten Zeitschlitz auf den nächsten zugeteilten Kanal zu wechseln und im Zeitschlitz mit der nächsten zugeteilten Zeitschlitznummer Information zu senden.

3. Zentrale (HUB) für ein System mit mehreren über ein gemeinsames Medium mit der Zentrale verbundenen Teilnehmereinrichtungen von Teilnehmern, wobei das gemeinsame Medium in mehrere Frequenz- oder Wellenlängenkanäle unterteilt ist, die wiederum in Zeitschlitze unterteilt sind, **dadurch gekennzeichnet, daß** die Zentrale Mittel aufweist, um jeden zu benützenden Zeitschlitz an die Teilnehmereinrichtung zuzuteilen durch Angabe je eines Kanals (CA) und einer Zeitschlitznummer (TSA) für jeden zugeteilten Zeitschlitz.

4. Teilnehmereinrichtung (NT) für ein System mit mehreren über ein gemeinsames Medium mit einer Zentrale (HUB) verbundenen Teilnehmereinrichtungen (NT) von Teilnehmern, wobei das gemeinsame Medium in mehrere Frequenz- oder Wellenlängenkanäle unterteilt ist, die wiederum in Zeitschlitze unterteilt sind, **dadurch gekennzeichnet, daß** die Teilnehmereinrichtung Mittel aufweist, um nach jedem benützten Zeitschlitz auf den nächsten zugeteilten Kanal (CA) zu wechseln und im Zeitschlitz mit der nächsten zugeteilten Zeitschlitznummer (TSA) Information zu senden.

5. Verfahren nach Anspruch 1, **dadurch gekennzeichnet, daß** seitens mindestens eines Teils der Teilnehmer bei Bedarf durch die zugeordnete Teilnehmereinrichtung eine bestimmte Zahl von Zeitschlitzen bei der Zentrale angefordert wird.

6. Verfahren nach Anspruch 1, **dadurch gekennzeichnet, daß** mindestens einem Teil der Teilnehmer eine feste Kapazität zugeordnet ist und daß die Zentrale daraus den aktuellen Bedarf der betroffenen Teilnehmer ermittelt.

## Claims

1. Method for granting time-slots in a system with several subscriber devices (NT) of subscribers, connected to a centre (HUB) via a common medium, the common medium being divided into several frequency or wavelength channels, which are in turn divided into time-slots, **characterised in that** time-slots are granted by the centre to at least some of the subscriber devices by specifying a channel (CA) and a time-slot number (TSA) each for each granted time-slot, **in that** each subscriber device concerned changes to the next granted channel after each time-slot has been used and sends information in the time-slot with the next granted time-slot number.

2. System with several subscriber devices (NT) of subscribers, connected to a centre (HUB) via a common medium, the common medium being divided into several frequency or wavelength channels, which are in turn divided into time-slots, **characterised in that** the centre has means for granting time-slots to the subscriber devices by specifying a channel and a time-slot number each for each granted time-slot, **in that** at least some of the subscriber devices have means for changing to the next granted channel after each time-slot has been used and to send information in the time-slot with the next granted time-slot number.

3. Centre (HUB) for a system with several subscriber devices of subscribers connected to the centre via a common medium, the common medium being divided into several frequency or wavelength channels, which are in turn divided into time-slots, **characterised in that** the centre has means for granting each time-slot to be used to the subsriber device by specifying a channel (CA) and a time-slot number (TSA) each for each granted time-slot.

4. Subscriber device (NT) for a system with several subcriber devices (NT) of subscribers, connected to a centre (HUB) via a common medium, the common medium being divided into several frequency or wavelength channels, which are in turn divided into time-slots, **characterised in that** the subscriber device has means for changing to the next granted channel (CA) after each time-slot has been used and for sending information in the time-slot with the next granted time-slot number (TSA).

5. Method according to claim 1, **characterised in that** on the part of at least some of the subscribers a specific number of time-slots is requested from the centre by the allocated subscriber device as required.

6. Method according to claim 1, **characterised in that** a fixed capacity is allocated to at least some of the subscribers and the centre determines from this the current requirement of the subscribers concerned.

## Revendications

1. Procédé pour allouer des créneaux temporels dans un système comprenant plusieurs équipements d'abonné (NT) d'abonnés reliés à une centrale (HUB) par le biais d'un support commun, le support commun étant divisé en plusieurs canaux de fréquence ou de longueur d'onde qui sont à leur tour divisés en créneaux temporels, **caractérisé en ce que** des créneaux temporels sont alloués par la centrale à au moins une partie des équipements d'abonné à chaque fois en indiquant un canal (CA) et un numéro de créneau temporel (TSA) pour chaque créneau temporel alloué, que chaque équipement d'abonné concerné, après chaque créneau temporel utilisé, passe au canal alloué suivant et envoie dans le créneau temporel des informations avec le numéro du créneau temporel alloué suivant.

2. Système comprenant plusieurs équipements d'abonné (NT) d'abonnés reliés à une centrale (HUB) par le biais d'un support commun, le support commun étant divisé en plusieurs canaux de fréquence ou de longueur d'onde qui sont à leur tour divisés en créneaux temporels, **caractérisé en ce que** la centrale présente des moyens pour allouer des créneaux temporels aux équipements d'abonné en indiquant à chaque fois un canal et un numéro de créneau temporel pour chaque créneau temporel alloué, qu'au moins une partie des équipements d'abonné présente des moyens pour, après chaque créneau temporel utilisé, passer au canal alloué suivant et envoyer dans le créneau temporel des informations avec le numéro du créneau temporel alloué suivant.

3. Centrale (HUB) pour un système comprenant plusieurs équipements d'abonné d'abonnés reliés à la centrale par le biais d'un support commun, le support commun étant divisé en plusieurs canaux de fréquence ou de longueur d'onde qui sont à leur tour divisés en créneaux temporels, **caractérisée en ce que** la centrale présente des moyens pour allouer à l'équipement d'abonné chaque créneau temporel à utiliser en indiquant à chaque fois un canal (CA) et un numéro de créneau temporel (TSA) pour chaque créneau temporel alloué.

4. Équipement d'abonné (NT) pour un système comprenant plusieurs équipements d'abonné (NT) d'abonnés reliés à une centrale (HUB) par le biais d'un support commun, le support commun étant divisé en plusieurs canaux de fréquence ou de longueur d'onde qui sont à leur tour divisés en créneaux temporels, **caractérisé en ce que** l'équipement d'abonné présente des moyens pour, après chaque créneau temporel utilisé, passer au canal (CA) alloué suivant et envoyer dans le créneau temporel des informations avec le numéro du créneau temporel (TSA) alloué suivant.

5. Procédé selon la revendication 1, **caractérisé en ce que** du côté d'au moins une partie des abonnés, un nombre donné de créneaux temporels est, en cas de besoin, demandé auprès de la centrale par l'équipement d'abonné affecté.

6. Procédé selon la revendication 1, **caractérisé en ce qu'**une capacité fixe est affectée à au moins une partie des abonnés et que la centrale détermine à partir de cela le besoin actuel des abonnés concernés.
